# EUROPEAN PATENT SPECIFICATION

(11) **EP 2 915 024 B1**
(45) Date of publication and mention of the grant of the patent: **07.03.2018**
(21) Application number: 13795361.8
(22) Date of filing: 05.11.2013
(51) Int. Cl.: G06F 3/01

(54) **CONTEXTUAL GESTURE CONTROLS**
KONTEXTUELLE GESTENSTEUERUNGEN
COMMANDES CONTEXTUELLES PAR GESTES

(30) Priority: 05.11.2012 US 201261722658 P; 31.10.2013 US 201314069049
(43) Date of publication of application: 09.09.2015
(73) Proprietor: Microsoft Technology Licensing, LLC, Redmond, WA 98052 (US)
(72) Inventor: KRIKORIAN, Blake, Redmond, Washington 98052-6399 (US)
(74) Representative: CMS Cameron McKenna Nabarro Olswang LLP
(86) International application number: PCT/US2013/068587
(87) International publication number: WO 2014/071407

(56) References cited:
- US-A1- 2009 197 635
- US-A1- 2012 179 967

## Description

### BACKGROUND

Gesture controls may be used with portable devices such as smart phones and tablet computers, as well as other computing devices having touch screens or other mechanisms for capturing user gestures. User gestures include directional and locational contacts with an input interface of a device (e.g., swipes and/or taps on a touch screen). When a user interacts with such devices, gestures may be used to perform operations such as unlocking the devices, playing games, or providing application inputs (e.g., for note taking applications, etc.).

A non-mobile product that utilizes gesture controls is Apple TV® from Apple, Inc. Apple TV® may be used in conjunction with a mobile device from Apple, Inc., such as an iPhone®, iPod Touch®, or an iPad®. For example, an application may be installed on the mobile device that allows a user to provide control signals from the mobile device to the Apple TV® unit. The combination of the application and the portable device allows for some limited use of gestures to control the operation of the Apple TV® unit.

Previous solutions as described above, however, are limited to intra-device control or are limited to use specifically with products from the same manufacturer. Further, previous solutions do not allow for context specific application of gestures (i.e., contextual gesture control) within a given mode of operation.

US 2009/0197635 A1 (Kim et al.) discloses a mobile device which has a plurality of different operation modes and at least one function predesignated for each of the operation modes, the mobile device comprising: a detector configured to detect a movement of the mobile device as applied by a gesture of a user; and a controller configured to determine a current operation mode of the mobile device among the plurality of operation modes; and to perform the at least one function predesignated for the determined current operation mode, according to the detected movement of the mobile device. The use of the various gestures in e.g. an internet browsing mode, a MP3 player mode, a video player mode, or a broadcast signal receiver mode is therein described.

US 2012/0179967 A1 (Hayes) relates to gesture-based controls for multimedia content. In an embodiment, a gesture is detected in a particular area of a touch screen interface on a device. A video playback command associated with the gesture may be identified, and an action corresponding to the video playback command may be determined. The action may then be performed on the same device that detects the gesture or on a different device that is communicatively coupled with the device that detects the gesture. The use of various gestures on the touchscreen like tap, slide, flick gestures, swipe, etc is considered.

### SUMMARY

A method for controlling a multi-media device using contextual gesture controls is described herein. In accordance with the method, information indicative of an operating mode of a multi-media device is obtained. In further accordance with the method, one or more control gesture representations associated with one or more first commands of a first operating mode of the multi-media device and with one or more second commands of a second operating mode of the multi-media device are received. It is then determined that the multi-media device is operating in the first operating mode based on the received information. The one or more control gesture representations are next translated into the one or more first commands based at least on the determining that the multi-media device is operating in the first operating mode. The one or more first commands are then output.

In an embodiment, one or more of the steps of the above-described method are performed by a controller. In another embodiment, one or more of the steps of the above-described method are performed by a set top box. In yet another embodiment, one or more of the steps of the above-described method are performed partially by a controller and/or partially by a set top box.

In another embodiment, one or more of the control gesture representations is normalized to control across a plurality of different multi-media devices, services, applications, channels and/or content providers.

In a further embodiment, a control gesture representation of the one or more control gesture representations corresponds to a first one of the one or more first commands in a first sub-mode of the first operating mode, and corresponds to a second one of the one or more first commands in a second sub-mode of the first operating mode.

In one embodiment, the first and second operating modes are a playback mode and a navigation mode respectively. In another embodiment, the first and second operating modes are a navigation mode and a playback mode respectively. In embodiments, the playback mode comprises one or more sub-modes that may include a live video sub-mode, an internet video sub-mode, a recorded video sub-mode, an on-demand video sub-mode, a pay-per-view video sub-mode, and/or an audio sub-mode. In embodiments, the navigation mode comprises one or more sub-modes that may include a program guide sub-mode, a recordings sub-mode, a top-level menu sub-mode, a video menu sub-mode, and/or a settings sub-mode.

In an embodiment, obtaining the information includes invoking an application programming interface (API) by a controller, and in some embodiments, the method described above includes outputting the one or more first commands from the controller to the multi-media device.

In an embodiment, receiving the one or more control gesture representations includes receiving the one or more control gesture representations by a set top box via an application programming interface (API).

A system is also described herein. In embodiments, the system is configured to control a multi-media device(s) using contextual gesture controls. The system includes operating mode logic, receiving logic, determination logic, translation logic, and output logic. The operating mode logic is configured to obtain information indicative of an operating mode of a multi-media device. The receiving logic configured to receive one or more control gesture representations associated with one or more first commands of a first operating mode of the multi-media device and one or more second commands of a second operating mode of the multi-media device. The determination logic is configured to determine that the multi-media device is operating in the first operating mode based one the obtained information. The translation logic is configured to translate the one or more control gesture representations into the one or more first commands based at least on the determining that the multi-media device is operating in the first operating mode. The output logic is configured to output the one or more first commands.

In an embodiment, one or more of the operating mode logic, the receiving logic, the determination logic, the translation logic, and the output logic are implemented by a controller. In another embodiment, one or more of the operating mode logic, the receiving logic, the determination logic, the translation logic, and the output logic are implemented by a set top box. In another embodiment, one or more of the operating mode logic, the receiving logic, the determination logic, the translation logic, and the output logic are implemented partially by the controller and/or partially by the set top box.

In embodiments, at least one control gesture representation of the one or more control gesture representations is normalized to control across a plurality of different multi-media devices, services, applications, channels and/or content providers.

In an embodiment, a control gesture representation of the one or more control gesture representations corresponds to a first one of the one or more first commands in a first sub-mode of the first operating mode, and corresponds to a second one of the one or more first commands in a second sub-mode of the first operating mode.

In an embodiment, a control gesture representation of the one or more control gesture representations corresponds to the first command in a first sub-mode of the first operating mode, and corresponds to a second command in a second sub-mode of the first operating mode.

In an embodiment, the first and second operating modes are a playback mode and a navigation mode respectively. In another embodiment, the first and second operating modes are a navigation mode and a playback mode respectively. In embodiments, the playback mode comprises one or more sub-modes that may include a live video sub-mode, an internet video sub-mode, a recorded video sub-mode, an on-demand video sub-mode, a pay-per-view video sub-mode, and/or an audio sub-mode. In embodiments, the navigation mode comprises one or more sub-modes that may include a program guide sub-mode, a recordings sub-mode, a top-level menu sub-mode, a video menu sub-mode, and/or a settings sub-mode.

In an embodiment, the operating mode logic is located in a controller and includes an application programming interface (API) by which the information is obtained.

In a further embodiment, the output logic is also located in the controller, and is configured to output the one or more first commands by transmitting the one or more first commands from the controller to the multi-media device.

In embodiments, the controller is one or more of phones (e.g., smartphones) or mobile devices, MP3 players, tablet computers, laptop computer, gaming console controllers, screenless touchpads, remote controllers with touch screens, optical tracking controllers, handheld devices, and/or the like.

In an embodiment, the receiving logic is located in a set top box and includes an application programming interface (API) by which the one or more control gesture representations are received. In an embodiment, the translating logic is also located in the set top box. In embodiments, the set top box is at least one of a stand-alone set top box, a set top box integrated in a television, a set top box in a cloud network, and/or a streaming set top box configured to receive a streaming service from a cloud network.

Another system is also described herein. In embodiments, the system is configured to control a multi-media device(s) using contextual gesture controls. The system includes a multi-media device, a set top box, and a controller. The set top box is communicatively coupled to the multi-media device and is configured to obtain information indicative of an operating mode of the multi-media device. The controller includes an application programming interface (API) and is communicatively coupled to the multi-media device and to the set top box. The controller is configured to receive the information from the set top box using the API, and is configured to accept one or more control gesture inputs associated with one or more first commands of a first operating mode of the multi-media device and associated with one or more second commands of a second operating mode of the multi-media device. The controller is further configured to determine that the multi-media device is operating in the first operating mode based on the received information. The controller is also configured to translate the one or more control gesture inputs into the one or more first commands for controlling the multi-media device based at least on the determining that the multi-media device is operating in the first operating mode, and to output the one or more first commands for controlling the multi-media device

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the claimed subject matter is not limited to the specific embodiments described in the Detailed Description. Such embodiments are presented herein for illustrative purposes only. Additional embodiments will be apparent to persons skilled in the relevant art(s) based on the teachings contained herein.

### BRIEF DESCRIPTION OF THE DRAWINGS

The accompanying drawings, which are incorporated herein and form part of the specification, illustrate embodiments of the present invention and, together with the description, further serve to explain the principles of the invention and to enable a person skilled in the relevant art(s) to make and use the invention.
FIG. 1 is a block diagram of an example multi-media environment in which contextual gestures are used to control one or more multi-media devices, in accordance with an embodiment.
FIG. 2 illustrates a table of example modes and sub-modes of operation in a multi-media environment, in accordance with an embodiment.
FIG. 3 is a block diagram of an example system for controlling multi-media devices using contextual control gestures, in accordance with an embodiment.
FIG. 4 is a block diagram of an example system for controlling multi-media devices using contextual control gestures that includes a set top box and a controller, in accordance with an embodiment.
FIG. 5 is a block diagram of an example system for controlling multi-media devices using contextual control gestures that includes a set top box and a controller, in accordance with another embodiment.
FIG. 6 depicts a flowchart of a method for controlling a multi-media device using contextual gesture controls, in accordance with an embodiment.
FIG. 7 shows an example computer system that may be used to implement various embodiments described herein.

The features and advantages of the present invention will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Introduction

The following detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of persons skilled in the relevant art(s) to implement such feature, structure, or characteristic in connection with other embodiments whether or not explicitly described.

Further, terminology used herein such as "about," "approximately," and "substantially" have equivalent meanings and may be used interchangeably.

Still further, components, devices, and/or the like described herein as "coupled" or "connected" in various manners (e.g., electrically, communicatively, etc.) may be directly or indirectly "coupled" or "connected" in embodiments, although the description herein is not exclusive indirect or direct embodiments unless explicitly and exclusively set forth.

Systems and methods are described herein that control multi-media devices using contextual gesture controls. The embodiments described herein enable control of multi-media environments according to contextual gesture inputs. Such embodiments may allow a user to navigate and control his/her multi-media experience through the use of a reduced number of inputs and/or controller buttons (e.g., using contextual gesture inputs). The embodiments herein also allow for navigation and control of multi-media environments without the need to continuously look at a controller as well as allowing for reduction or elimination of controller backlighting. Embodiments support centralized control of multi-media devices across a variety of devices, applications, content providers, services, channels, manufacturers and/or communication protocols.

Section II below describes exemplary gestures that may be used to control multi-media devices, as described herein. Section III describes example multi-media environments. Section IV describes exemplary contextual control gestures and operating modes that may be used to control multi-media devices. Section V describes exemplary systems for implementing contextual control gestures. Section VI describes various methods that may be implemented for controlling multi-media devices. Section VII describes an example computer system that may be used to implement embodiments described herein. Section VIII provides some concluding remarks.

### II. Example Gestures

In embodiments described herein, gestures may be used as inputs to a controller for controlling one or more multi-media devices in a multi-media environment. The input gestures may correspond to one or more commands. The gesture-to-command mappings may be determined based on a state or mode of operation (also referred to as a context) in which a given multi-media device operates, as discussed in further detail below. Such gestures are considered to be contextual control gestures, at least in that the gesture-to-command mappings may provide different commands for a gesture based on the operating context. Example gesture features include, but are not limited to: directional swipes (multi-directional and up, down, left, right, and/or diagonal combinations thereof), taps (including holds), clicks (including holds), location of directional swipes and/or taps on the controller or gesture input interface, combinations of directional swipes, taps and/or clicks, speed and and/or acceleration of directional swipes, length of directional swipes, and/or the like. Gesture inputs may be made by human contact such as a finger swipe, using a stylus, and/or using any other input device or method by which a gesture may be input.

In some embodiments, the gesture-to-command mapping may be stored in a database or lookup table of a controller, a set top box, or another device in the multi-media environment. In an embodiment, the database or lookup table may be stored remotely, such as in the cloud. In some embodiments, the gesture-to-command mapping may be preset, or may be programmable and/or configurable by a user.

### III. Example Multi-Media Environments

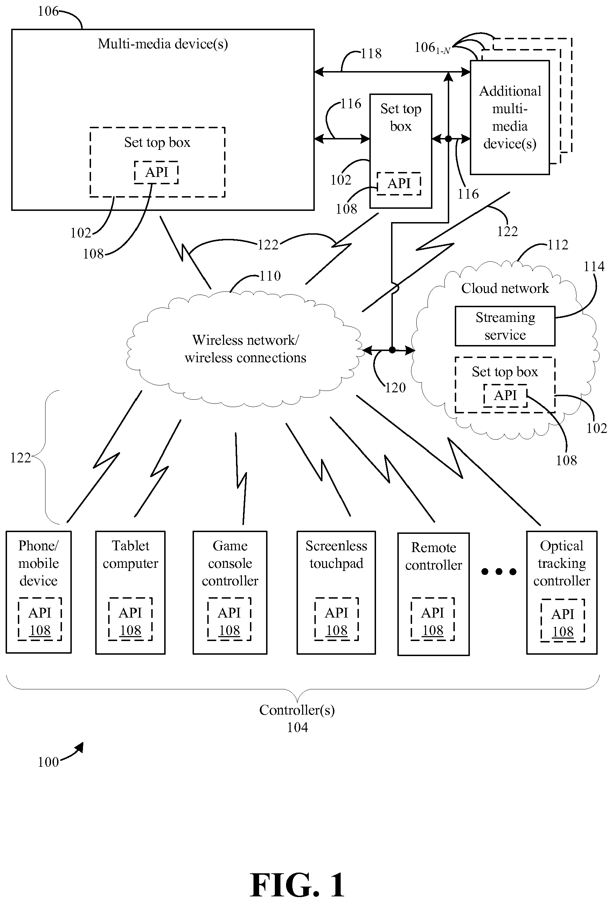

FIG. 1 is a block diagram of an example multi-media environment 100 that includes a set top box (STB) and one or more controllers for controlling multi-media devices using contextual gesture controls. It is noted that multi-media environment 100 is described herein merely by way of example only. Persons skilled in the relevant art(s) will readily appreciate that the contextual gesture control techniques described herein may be implemented in a wide variety of systems other than multi-media environment 100 of FIG. 1.

As shown in FIG. 1, multi-media environment 100 includes a set top box 102, one or more controllers 104, one or more multi-media devices 106, and an API 108. Multi-media environment 100 also includes one or more additional multi-media devices 106_{1-*N*}, wireless network/wireless connections 110, and a cloud network 112.

As shown in FIG. 1, multi-media device(s) 106 and additional multi-media devices 106_{1-*N*} are communicatively coupled to set top box 102 via a communication line 116. Multi-media device(s) 106 and additional multi-media devices 106_{1-*N*} may be connected to each other via a communication line 118 which may comprise a number of individual device connections. Wireless communication links 122 communicatively connect controller(s) 104 with multi-media device(s) 106, additional multi-media devices 106_{1-*N*}, and set top box 102 in multi-media environment 100. Wireless communication links 122 may connect components and devices of multi-media environment 100 via direct connections and/or via indirect connections, e.g., through wireless network/wireless connections 110, in embodiments. Furthermore, as will be appreciated by those of skill in the relevant art(s), wireless network/wireless connections 110 and wireless communication links 122 are shown in wireless configurations for illustration, and wireless network/wireless connections 110 and wireless communication links 122 may be implemented in a hardwired manner, or a combination of a wireless and a hardwired manner in embodiments. Cloud network 112 may be communicatively coupled via a communication line 120 to set top box 102, multi-media device(s) 106, additional multi-media device(s) 106_{1-*N*}, and/or wireless network/wireless connections 110. Cloud network 112 may be communicatively coupled via communication line 120, wireless network/wireless connections 110, and/or wireless communication links 122 to one or more controller(s) 104.

In embodiments, communication line 116, communication line 118, communication line 120, and wireless communication links 122 allow for the communication of signals and data between their respectively connected devices and components using any known or future communication protocol related to in-home networks, multi-media applications and devices, data transfers, and/or communications applications.

As illustrated, multi-media environment 100 includes cloud network 112. Cloud network 112 may be the Internet or a portion thereof, a private network, a private cloud network implementation, a media or multi-media service provider, and/or the like. Cloud network 112 may include a streaming service 114 and an implementation of set top box 102. Streaming service 114 may be a streaming service that provides, audio, video, and/or multi-media content from cloud network 112 via communication line 120.

As illustrated, multi-media environment 100 may also include multiple instances of API 108 which may reside in the devices and components of multi-media environment 100, e.g., in set top box 102, in controller(s) 104, in multi-media device(s) 106, additional multi-media device(s) 106_{1-*N*}, and/or in cloud network 112 (e.g., as exemplified in FIG. 1). Further, an instance of API 108 may be implemented in more than one device or component, e.g., partially in set top box 102 and partially in controller(s) 104. Still further, API 108 may be instantiated once in multi-media environment 100 and accessed/invoked by each component of multi-media environment 100, or may be instantiated once in set top box 102 and once in controller(s) 104, and accessed/invoked by respective sub-components thereof.

In embodiments, API 108 may be configured to implement commands based on gesture inputs or to provide access to logic that performs that function. API 108 may be a custom or standardized API that is configured to (or capable of) interpret the state or mode of a device in multi-media environment 100 (e.g., set top box 102, controller(s) 104, multi-media device(s) 106, additional multi-media device(s) 106_{1-*N*}, and/or a device(s) in cloud network 112) and/or provide an indication of the state or mode to controller(s) 104. In embodiments, controller(s) may not be related to a device in multi-media environment 100 (e.g., the controller is manufactured by a different company than the device, the controller and the device have one or more communication protocol differences, the controller is not configured to communicate directly with the device, etc.). As such, in embodiments, set top box 102 in conjunction with controller(s) 104 may provide control signals and/or commands for any number of unrelated devices (e.g., devices from different manufacturers) in multi-media environment 100 using a common set of gestures to be applied at the one or more controller(s) 104 in conjunction with API 108. That is, based on the mode or state of a device, a contextual control gesture (e.g., gesture input) may be translated into an appropriate command for the device in the given mode or state. In some embodiments, the control signals and/or commands may be transmitted or provided serially allowing for a broad range of applicability across a number of multi-media devices. In some embodiments, API 108 may include or provide access to a state machine that may be used to implement commands based on gesture inputs.

In embodiments, multi-media device(s) 106 and additional multi-media device(s) 106_{1-*N*} may include display devices, television signal receivers (e.g., cable TV boxes, satellite receivers, over-the-air antennas, etc.), digital versatile disc (DVD) players, compact disc (CD) players, digital video recorders (DVRs), mobile devices, tablet computers, laptop/desktop computers, music and MP3 players, mono or multichannel audio systems and/or other audio systems, and/or the like. Display devices may include a television, a monitor or computer monitor, a visual projection device, a phone or smartphone or other mobile device, a tablet computer, and/or the like. Devices, components, and/or cloud network 112 may include hardware and/or services for streaming or downloading audio, video, or multi-media content to a user. In embodiments, display devices are considered to be a subset of multi-media devices.

Set top box 102 may be implemented and/or configured in various ways. For instance, in embodiments, set top box 102 may be a stand-alone unit, may be incorporated into a multi-media device such as multi-media device(s) 106 and/or additional multi-media device(s) 106_{1-*N*} (e.g., a display device), and/or may exist in cloud network 112 as one or more modules, devices, and/or services. Set top box 102 may be configured to provide its state or mode of operation ("mode") to the one or more controller(s) 104. Providing the state or mode may be performed in response to a request from one or more controller(s) 104, may be periodically performed, and/or may be performed when the state or mode changes. Set top box 102 may also be configured to provide the state or mode of any of the following to the one or more controllers in a manner as described herein: any of multi-media device(s) 106 and/or additional multi-media device(s) 106_{1-*N*} in multi-media environment 100 and/or a device(s) or service(s) in cloud network 112. Operation states/modes are discussed in further detail below.

As noted above, in embodiments, API 108 may be implemented and/or invoked in set top box 102, wholly or in part.

In embodiments, controller(s) 104 may be one or more of a phone (e.g., a smartphone), an MP3 player, a tablet computer, a laptop computer, a gaming console controller, a screenless touchpad, a remote controller with a touch screen, an optical tracking controller, a handheld device, a mobile device, and/or the like. In embodiments, controller(s) 104 may each include a touch screen or other means that enable a user of controller(s) 104 to input a gesture that corresponds to a mode and/or a command for one or more of the devices (such as multi-media device(s) 106 and/or additional multi-media device(s) 106_{1-*N*}) in multi-media environment 100. In some embodiments, the user may input the gesture at and/or using a controller, and an indication or representation of the gesture may be transmitted to the set top box or to API 108 within controller(s) 104 where the command may be generated based on the gesture input and/or the device mode.

In embodiments, API 108 may be implemented and/or invoked in controller(s) 104, wholly or in part.

### IV. Example Contextual Control Gestures and Operating Modes

As described in the sections above, the same gesture may correspond to a different command depending on the mode of the device. Additionally, with respect to different multi-media devices, services, applications, channels and/or content providers, a given gesture may correspond to the same command across these different multi-media devices, services, applications, channels and/or content providers. That is, a gesture may be normalized as to its control or associated command in the multi-media environment across a plurality of different multi-media devices, services, applications, channels and/or content providers. For instance, video content may be provided via a Hulu® application, on a Roku® device, from a Netflix® program or service, on an Xbox® device, from a DVR associated with a DirecTV® device or service, and/or the like. In each case, the video content may be viewed by a user on these different video playback systems in a playback mode or playback sub-mode as noted herein. In such modes, a given gesture and its corresponding command(s) may be normalized across the different devices, services, and/or applications such that the given gesture always corresponds to the same command in each of the different devices, services, and/or applications. For instance, in one example, a swipe right gesture may always correspond to a FAST FORWARD command even if the different systems have different individual controls for such a command. Further, the normalized gestures may correspond to different modes of operation as described herein.

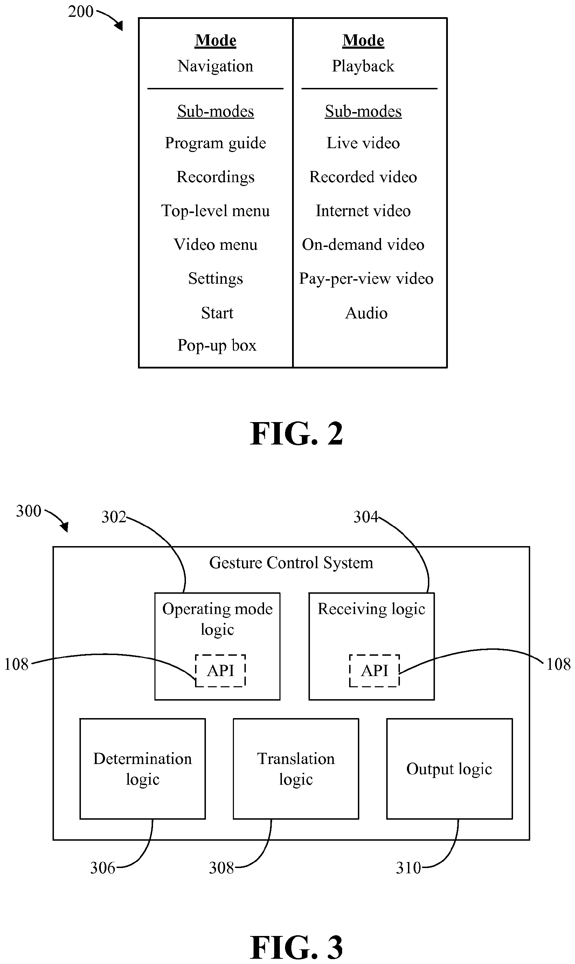

Devices in multi-media environment 100 (e.g., multi-media device(s) 106, additional multi-media device(s) 106_{1-*N*}, and/or a device(s) or service(s) in cloud network 112) may operate in one or more states or modes of operation ("device modes"), in embodiments. For example, FIG. 2 shows example device modes 200 illustrating states or modes of operation for devices in multi-media environment 100. For instance, multi-media devices 106 and/or additional multi-media device(s) 106_{1-*N*}, as described above, may have two or more operating modes such as a "navigation" mode and a "playback" mode. In a navigation mode, a user may navigate through one or more menus that control the settings of the multi-media devices and one or more menus showing the content and organization thereof in the multi-media devices. In a playback mode, a user may be presented with active audio and/or video. As discussed in further detail in embodiments herein, the same or similar gestures applied at/using a controller by a user may indicate or translate to different commands within the multi-media environment according to the state or mode of a multi-media device (i.e., the context of the multi-media content being displayed or provided). For example, a given gesture in a navigation mode may be interpreted and applied as one command, while the same or similar gesture in a playback mode may be interpreted and applied as a different command based on mode context.

The state or mode of operation of a given device, e.g., playback mode, may be further described in terms of sub-modes of operation ("sub-modes"). FIG. 2 also shows example playback sub-modes of operation in a multi-media environment, according to example embodiments. For example, the playback mode described above may be further categorized into sub-modes such as playback, live video, internet video, recorded video, on-demand video, pay-per-view video, and audio (and/or the like). In one or more of the sub-modes described herein, a gesture (or similar gesture) for one navigation sub-mode may correspond to a command that is similar to, the same as, or different than a command corresponding to another playback sub-mode. For example, in live playback (e.g., a live video sub-mode), a swipe down gesture may correspond to a CHANNEL DOWN command, while in recorded video, a swipe down gesture may correspond to a STOP command. In other embodiments, a swipe right gesture may correspond to a SKIP command during recorded video, while a swipe right gesture may correspond to a NEXT CHAPTER command during on-demand video. It is contemplated, however, that some gesture/command associations may be persistent across two or more playback sub-modes. For example, a gesture for volume control may be the same for one or more of live video, internet video, recorded video, on-demand video, pay-per-view video, audio, etc.

The state or mode of operation ("mode") of a given device, e.g., navigation mode, may also be further described in terms of sub-modes of operation ("sub-modes"). FIG. 2 also shows example navigation sub-modes of operation in a multi-media environment, according to example embodiments. For example, the navigation mode described above may be further categorized into sub-modes such as a program guide, a recording menu, a top-level menu, a video menu, a settings menu, a start menu, and a pop-up dialog box (and/or the like). In one or more of the sub-modes described herein, a gesture (or substantially similar gestures) for one navigation sub-mode may correspond to a command that is similar to, the same as, or different than a command corresponding to another navigation sub-mode. For example, in the program guide, a swipe left gesture may correspond to a MOVE LEFT command, while in the recording list, a swipe left gesture may correspond to a DELETE command. In another example, in the program guide, a swipe right gesture may correspond to a MOVE RIGHT command, while in the recording list, a swipe left gesture may correspond to a PLAY command. It is contemplated, however, that some gesture/command associations may be persistent across two or more navigation sub-modes. For example, a gesture for selection of an item (e.g., a tap or double tap gesture, or a click or double click gesture) may be the same for one or more of a program guide, a recordings list, menu/settings, and a video menu (and/or the like).

### V. Example Systems for Implementing Contextual Control Gestures

This section describes exemplary systems for implementing contextual control gestures as described herein.

For example, FIG. 3 shows a block diagram of a gesture control system 300 that includes logic for controlling multi-media devices using contextual gesture controls. It is noted that gesture control system 300 is described herein merely by way of example only. Persons skilled in the relevant art(s) will readily appreciate that the contextual gesture control techniques described herein may be implemented in a wide variety of systems other than gesture control system 300 of FIG. 3.

As shown in FIG. 3, gesture control system 300 includes operating mode logic 302, receiving logic 304, determination logic 306, translation logic 308, and output logic 310. Each of these logic components may be communicatively coupled with the other logic components shown in FIG. 3, and each logic component may be communicatively coupled with one or more external devices, external services, and/or external logic components (not shown). Furthermore, each logic component may be implemented as hardware, firmware, and/or software, or any combination thereof. For instance, one or more of operating mode logic 302, receiving logic 304, determination logic 306, translation logic 308, and output logic 310 may be implemented as a software module in gesture control system 300 that is stored in a memory and executed by a processing device (not shown but described in detail below).

In embodiments, operating mode logic 302 may be configured to obtain information indicative of an operating mode of a multi-media device. Operating mode logic 302 may be implemented in set top box 102, in controller(s) 104, and/or partially in both set top box 102 and controller(s) 104. In embodiments, set top box 102 and controller(s) 104 obtain information indicative of an operating mode of a multi-media device using operating mode logic 302 via communication lines and/or wireless communication links with multi-media devices (e.g., multi-media device(s) 106 and/or additional multi-media device(s) 106_{1-*N*}) as described with respect to FIG. 1 above.

Operating mode logic 302 may include an instance of API 108 as described above with respect to FIG. 1 and in the following section. Operating mode logic 302 may invoke API 108 to obtain the information. Operating mode logic 302 and API 108 may include logic configured to obtain information received in a transmission or signal in accordance with known or future data transfer protocols. The information may be obtained using a camera or optical controller, or from a signal provided by a multi-media device.

In embodiments, operating mode logic 302 may be updated by a user, e.g., via programming or firmware updates, to obtain information using newly adopted protocols.

In embodiments, receiving logic 304 may be configured to receive one or more control gesture representations associated with one or more first commands of a first operating mode of the multi-media device and one or more second commands of a second operating mode of the multi-media device. In embodiments, receiving logic 304 may receive control gesture representations based on a gesture input that a user applies to a gesture input interface as described below. Receiving logic 304 may be implemented in set top box 102, in controller(s) 104, and/or partially in both set top box 102 and controller(s) 104.

Receiving logic 304 may include an instance of API 108 as described above with respect to FIG. 1 and in the following section. Receiving logic 304 may invoke API 108 to receive the one or more control gesture representations. Receiving logic 304 and API 108 may include logic configured to recognize and receive known or future control gesture representations, and in embodiments, receiving logic 304 may be updated by a user, e.g., via programming or firmware updates, to recognize received control gesture representations using newly adopted gestures (e.g., custom gestures created by a user).

Determination logic 306 may be configured to determine that the multi-media device is operating in an operating mode based on the obtained information in embodiments. For instance, determination logic 306 may determine that a multi-media device is in a playback mode or a navigation mode (or any sub-mode thereof) as described herein based on state or mode information received by operating mode logic 302. In embodiments, the operating mode may be determined by comparing the obtained information to entries in a database or a lookup table (not shown). Determination logic 306 may be implemented in set top box 102, in controller(s) 104, and/or partially in both set top box 102 and controller(s) 104.

In embodiments, translation logic 308 may be configured to translate the one or more control gesture representations into commands based at least on the determining that the multi-media device is operating in the first operating mode. Translation logic 304 may include an instance of API 108 as described above with respect to FIG. 1 and in the following section. Translation logic 304 may invoke API 108 to translate the one or more control gesture representations into one or more respective commands. For instance, if a multi-media device is in a playback mode or sub-mode, a control gesture representation may be translated to a command associated with the playback mode, but if the multi-media device is in a navigation mode or sub-mode, the same control gesture representation may be translated to a command associated with the navigation mode. In a non-limiting example, it may be determined that a multi-media device is operating in playback mode and further in a recorded video sub-mode. A swipe right gesture may correspond to a SKIP command during recorded video. However, if the mode changes to navigation in a program guide sub-mode, a swipe right gesture may correspond to a MOVE RIGHT command. In another example, a swipe right gesture may correspond to a SKIP command while in the playback mode and a recorded video sub-mode, while a swipe right gesture may correspond to a NEXT CHAPTER command while in the playback mode and in an on-demand video sub-mode. In yet another example, in the program guide sub-mode of the navigation mode, a swipe right gesture may correspond to a MOVE RIGHT command, while in the recording list sub-mode, a swipe left gesture may correspond to a PLAY command.

In embodiments, a lookup table or database may be used to translate the one or more control gesture representations into commands. The lookup table or database may be stored locally, e.g., in any modules and/or devices described above or in exemplary processor-based computer system 700 described below. In some embodiments, the lookup table or database may be stored remotely on a network or on the Internet (e.g., in cloud network 112).

Translation logic 306 may be implemented in set top box 102, in controller(s) 104, and/or partially in both set top box 102 and controller(s) 104.

Output logic 310 may be configured to output one or more commands, in embodiments. For example, output logic may receive one or more commands from translation logic 308 and output the command(s) to one or more of set top box 102, controller(s) 104, multi-media devices 106, additional multi-media device(s) 106_{1-*N*}, and/or modules, devices, and/or services in cloud network 112. Output logic 310 may be implemented in set top box 102, in controller(s) 104, and/or partially in both set top box 102 and controller(s) 104.

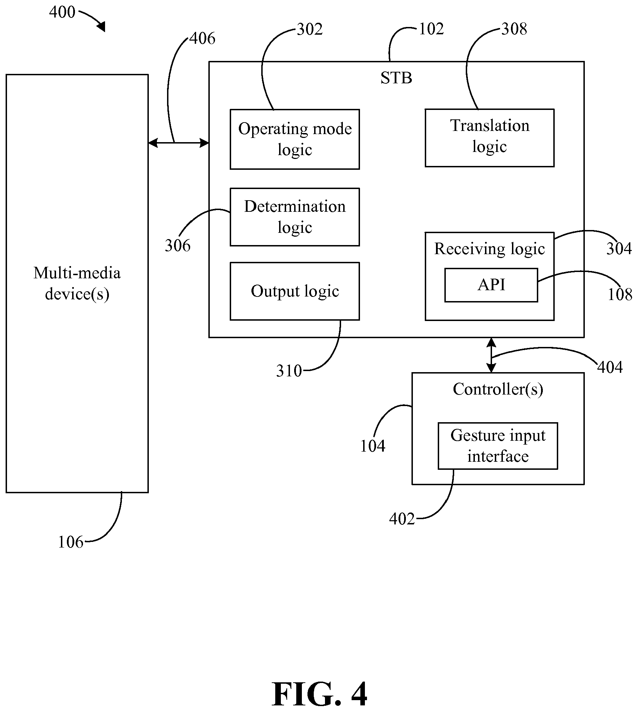

FIG. 4 shows a block diagram of an example system 400 in which gesture control system 300 is substantially implemented in a set top box (e.g., set top box 102). That is, system 400 as illustrated may be a further embodiment of gesture control system 300. It is noted that system 400 is described herein merely by way of example only. Persons skilled in the relevant art(s) will readily appreciate that the contextual gesture control techniques described herein may be implemented in a wide variety of systems other than system 400 of FIG. 4.

As shown in FIG. 4, system 400 includes set top box 102, controller(s) 104, and multi-media device(s) 106. Set top box 102 is communicatively coupled to controller(s) 104 via communication line 404, and is communicative coupled to multi-media device(s) 106 via communication line 406.

Set top box 102 includes operating mode logic 302, receiving logic 304, API 108, determination logic 306, translation logic 308, and output logic 310 as described above with respect to FIG. 3. Each of these logic components may be communicatively coupled with the other logic components shown in FIG. 4, and each logic component may be communicatively coupled with one or more other devices, services, and/or logic components (e.g., controller(s) 104 and sub-components thereof, and multi-media device(s) 106 and sub-components thereof). Furthermore, each logic component may be implemented as hardware, firmware, and/or software, or any combination thereof. For instance, one or more of operating mode logic 302, receiving logic 304, API 108, determination logic 306, translation logic 308, and output logic 310 may be implemented as a software module in system 400 that is stored in a memory and executed by a processing device (not shown but described in detail below).

Controller(s) 104 may include a gesture input interface 402. Gesture input interface 402 may comprise one or more of a touch screen, a touch pad, a click pad, and/or the like. Gesture input interface 402 is configured to allow a user to input a gesture to controller(s) 402 using, e.g., a finger, a stylus, and/or the like. As described in embodiments, the input gesture may correspond to one or more commands associated with one or more operating modes and/or sub-modes of multi-media devices. Gesture input interface 402 may provide a representation of the input gesture to one or more services, devices and/or components described herein directly or indirectly.

For example, gesture input interface 402 may provide a gesture representation of the input gesture via communication line 404 to receiving logic 304 via API 108 of set top box 102 in FIG. 4. In embodiments, receiving logic 304 may receive the control gesture representation from one or more controllers (e.g., controller(s) 104) that may be provided by different companies and/or manufacturers, and may identify the control gesture representation regardless of the protocol used to provide it, e.g., by using a lookup table or database for identification. Operating mode logic 302 obtains information indicative of an operating mode of multi-media device(s) 106 and provides the information to determination logic 306. Determination logic 306 determines the operating mode of multi-media device(s) 106 (e.g., as described herein). The identified control gesture representation may be provided to translation logic 308 along with the determined operating mode. Translation logic 308 may translate the control gesture representation to a command based at least on the determined operating mode. The operating mode-appropriate command may be provided to output logic 310, and output logic 310 may output the command to multi-media device(s) 106.

In alternate embodiments, output logic 310 may output the command to controller(s) 104, and controller(s) 104 may wirelessly transmit the command to multi-media device(s) 106.

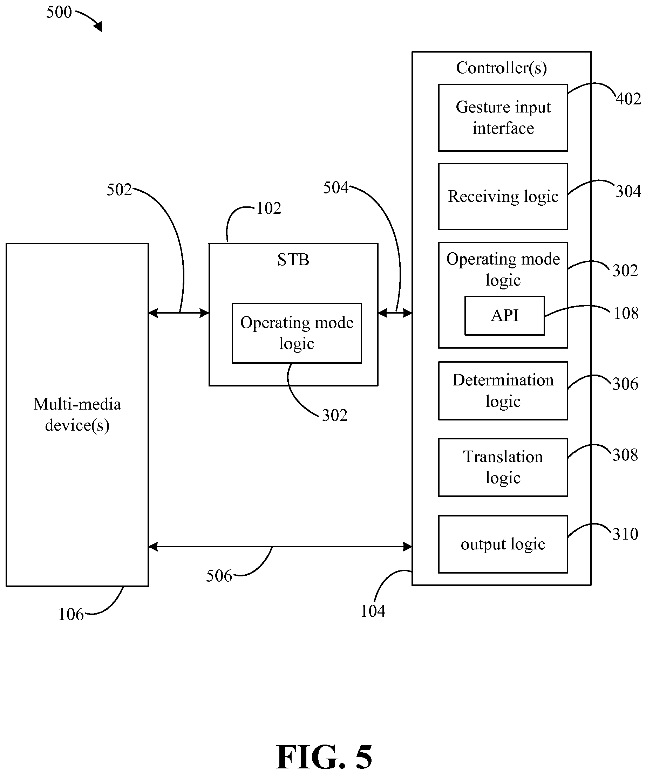

FIG. 5 shows a block diagram of an example system 500 in which gesture control system 300 is substantially implemented in a controller (e.g., controller(s) 104). That is, system 500 as illustrated may be a further embodiment of gesture control system 300. It is noted that system 500 is described herein merely by way of example only. Persons skilled in the relevant art(s) will readily appreciate that the contextual gesture control techniques described herein may be implemented in a wide variety of systems other than system 500 of FIG. 5.

As shown in FIG. 5, system 500 includes set top box 102, controller(s) 104, and multi-media device(s) 106. Set top box 102 is communicatively coupled to controller(s) 104 via a communication line 504, and is communicatively coupled to multi-media device(s) 106 via a communication line 502. Controller(s) 104 and multi-media device(s) 106 may be communicatively coupled via a communication line 506.

Set top box 102 may include operating mode logic 302, as described above with respect to FIG. 3. Operating mode logic 302 may be communicatively coupled with the other logic components shown in FIG. 4, and with one or more other devices, services, and/or logic components (e.g., controller(s) 104 and sub-components thereof, and multi-media device(s) 106 and sub-components thereof). For example, operating mode logic 302 in set top box 102 of FIG. 5 may obtain information indicative of an operating mode of multi-media device(s) 106, and may provide the information to controller(s) 104 and/or operating mode logic 302 in controller(s) 104 when invoked to do so via API 108. Furthermore, operating mode logic 302 may be implemented as hardware, firmware, and/or software, or any combination thereof. For instance, operating mode logic 302 may be implemented as a software module in system 500 that is stored in a memory and executed by a processing device (not shown but described in detail below).

Controller(s) 104 may include gesture input interface 402, as described in FIG. 4, and operating mode logic 302, receiving logic 304, API 108, determination logic 306, translation logic 308, and output logic 310 as described above with respect to FIG. 3. Each of these logic components may be communicatively coupled with the other logic components shown in FIG. 5, and each logic component may be communicatively coupled with one or more other devices, services, and/or logic components (e.g., set top box 102 and sub-components thereof, and multi-media device(s) 106 and sub-components thereof). Furthermore, each logic component may be implemented as hardware, firmware, and/or software, or any combination thereof. For instance, one or more of operating mode logic 302, receiving logic 304, determination logic 306, API 108, translation logic 308, and output logic 310 may be implemented as a software module in system 500 that is stored in a memory and executed by a processing device (not shown but described in detail below).

Gesture input interface 402 may comprise one or more of a touch screen, a touch pad, a click pad, and/or the like. Gesture input interface 402 is configured to allow a user to input a gesture to controller(s) 402 using, e.g., a finger, a stylus, and/or the like. As described in embodiments, the input gesture may correspond to one or more commands associated with one or more operating modes and/or sub-modes of multi-media devices. Gesture input interface 402 may provide a representation of the input gesture to one or more services, devices and/or components described herein.

For example, gesture input interface 402 may provide a gesture representation of the input gesture to receiving logic 304 of controller(s) 104 in FIG. 5. Operating mode logic 302 obtains information indicative of an operating mode of multi-media device(s) 106 (e.g., via API 108) and provides the information to determination logic 306. Determination logic 306 determines the operating mode of multi-media device(s) 106 (e.g., as described herein). The identified control gesture representation may be provided to translation logic 308 along with the determined operating mode. As described above with respect to FIG. 3, translation logic 308 may translate the control gesture representation to a command based at least on the determined operating mode. The operating mode-appropriate command may be provided to output logic 310 of system 400, and output logic 310 may output the command to multi-media device(s) 106.

### VI. Example Methods of Operation

This section describes various methods that may be implemented by devices and/or systems to control multi-media devices using contextual control gestures as described herein.

As noted above, the same or similar gestures may indicate or translate to different commands within the multi-media environment according to the state or mode of operation ("mode") of a multi-media device (i.e., the context of the multi-media content being displayed or provided). In some embodiments, a set top box (e.g., set top box 102) and/or one or more controllers (e.g., controller(s) 104) may automatically switch a gesture/command mapping based on the mode or provided context of a given device. Such switching may be implemented using an API (e.g., API 108) or state machine as described above. For example, when a user selects a recorded video to watch in the navigation mode, the mode automatically switches to the playback mode when the recorded video begins to play. Similarly, when the playback of the recorded video ends and the multi-media device ends playback and provides a navigation menu without the need for input from the user, the mode automatically switches from the playback mode to the navigation mode.

The API and/or the state machine may accomplish the described automatic switching by monitoring the signal stream from one or more of the multi-media devices in the multi-media environment in embodiments. In an embodiment, an optical monitor (e.g., a camera or optical controller) may be used in conjunction with a set top box and/or a controller to monitor the state or mode of a given multi-media device (e.g., by monitoring one or more display devices). In embodiments, the set top box may obtain information indicative of an operating mode of a multi-media device via communication connections between the set top box and one or more multi-media devices. In accordance with an embodiment, the set top box may have a pass signal through mechanism or module that allows for data relating to the state or mode of a multi-media device to pass to the controller such that the controller obtains the device state/mode information. In such embodiments, the controller may operate as an intermediary set top box and may perform some or all of the operations of a set top box. In these embodiments, the controller may interface with the optical monitor to determine when pop-up dialog boxes occur.

Pop-up dialog boxes may also trigger a switch in state or mode (i.e., a change in context). In some embodiments, pop-up dialog boxes may be considered part of, or a sub-mode of, the navigation mode. A change in context upon the occurrence of a pop-up dialog box may allow for interacting with the pop-up dialog box without affecting the underlying operational mode. In some embodiments, a specific gesture or combination of gestures may allow a user to control the underlying operational mode before interacting with the pop-up dialog box. For example, a user may use a specific gesture to issue a PAUSE command for underlying live or recorded video when a pop-up dialog box appears.

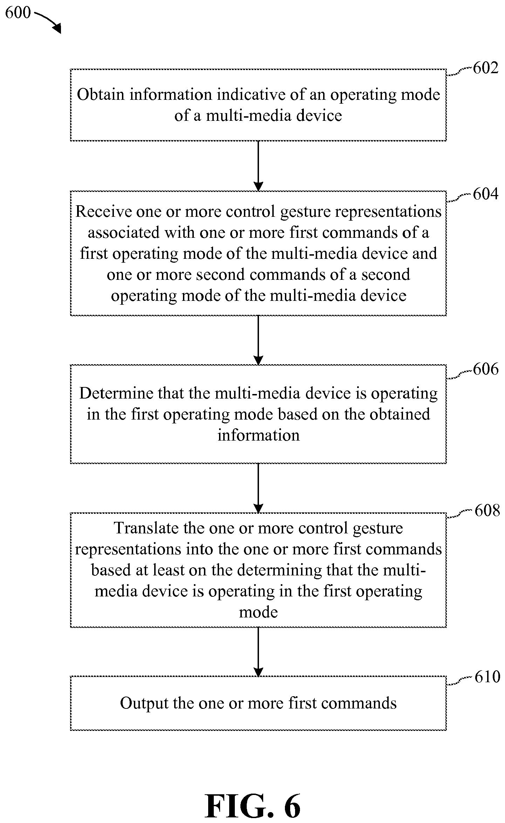

FIG. 6 depicts a flowchart 600 of a method for controlling a multi-media device using contextual gesture controls, in accordance with an embodiment. The method of flowchart 600 may be performed, for example, by set top box 102, controller(s) 104, and API 108 as described above in reference to FIG. 1, by gesture control system 300 as described above in reference to FIG. 3, by gesture control system 400 as described above in reference to FIG. 4, and/or by gesture control system 500 as described above in reference to FIG. 5.

As shown in FIG. 6, the method of flowchart 600 begins at step 602, in which information indicative of an operating mode of a multi-media device is obtained. This step may be performed, for example, by operating mode logic such as operating mode logic 302 of FIGS. 3, 4, and 5. Operating mode logic 302 may be implemented and/or invoked in set top box 102 and/or controller(s) 104. Furthermore, operating mode logic 302 may include an instance of API 108 in embodiments. The operating mode may be a mode or sub-mode as shown in FIG. 3.

At step 604, one or more control gesture representations associated with one or more first commands of a first operating mode of the multi-media device and one or more second commands of a second operating mode of the multi-media device are received. This step may be performed, for example, by receiving logic such as receiving logic 304 of FIGS. 3, 4, and 5. Receiving logic 304 may be implemented and/or invoked in set top box 102 and/or controller(s) 104. Furthermore, receiving logic 304 may include an instance of API 108 in embodiments.

At step 606, it is determined that the multi-media device is operating in the first operating mode based on the obtained information. This step may be performed, for example, by determination logic such as determination logic 306 of FIGS. 3, 4, and 5. Determination logic 306 may be implemented and/or invoked in set top box 102 and/or controller(s) 104.

At step 608, the one or more control gesture representations are translated into the one or more first commands based at least on the determining that the multi-media device is operating in the first operating mode. This step may be performed, for example, by translation logic such as translation logic 308 of FIGS. 3, 4, and 5. Translation logic 308 may be implemented and/or invoked in set top box 102 and/or controller(s) 104.

In embodiments, a lookup table or database may be used to translate the one or more control gesture representations into commands. The lookup table or database may be stored locally, e.g., in any modules and/or devices described above or in exemplary processor-based computer system 700 described below. In some embodiments, the lookup table or database may be stored remotely on a network or on the Internet (e.g., in cloud network 112).

At step 610, the one or more first commands are output. This step may be performed, for example, by output logic such as output logic 310 of FIGS. 3, 4, and 5. Output logic 310 may be implemented and/or invoked in set top box 102 and/or controller(s) 104.

In one embodiment, step 610 comprises outputting the one or more first commands from controller(s) 104 to set top box 102. In another embodiment, step 610 comprises outputting the one or more first commands from set top box 102 to one or more of multi-media device(s) 106, additional multi-media device(s) 106_{1-*N*}, and/or modules, devices, and/or services in cloud network 112. In yet another embodiment, step 610 comprises outputting the one or more first commands from controller(s) 104 to one or more of multi-media device(s) 106, additional multi-media device(s) 106_{1-*N*}, and/or modules, devices, and/or services in cloud network 112.

The method of flowchart 600 may further include the control gesture representation corresponding to the first command in a first sub-mode of the first operating mode, and corresponding to a second command in a second sub-mode of the first operating mode. In embodiments, the first operating mode and the second operating mode may be a playback mode and a navigation mode, respectively, or may be a navigation mode and a playback mode, respectively.

In embodiments, the playback mode comprises one or more sub-modes that may include a live video sub-mode, an internet video sub-mode, a recorded video sub-mode, an on-demand video sub-mode, a pay-per-view video sub-mode, and/or an audio sub-mode. In embodiments, the navigation mode comprises one or more sub-modes that may include a program guide sub-mode, a recordings sub-mode, a top-level menu sub-mode, a video menu sub-mode, and/or a settings sub-mode.

### VII. Example Processor-Based System Implementation

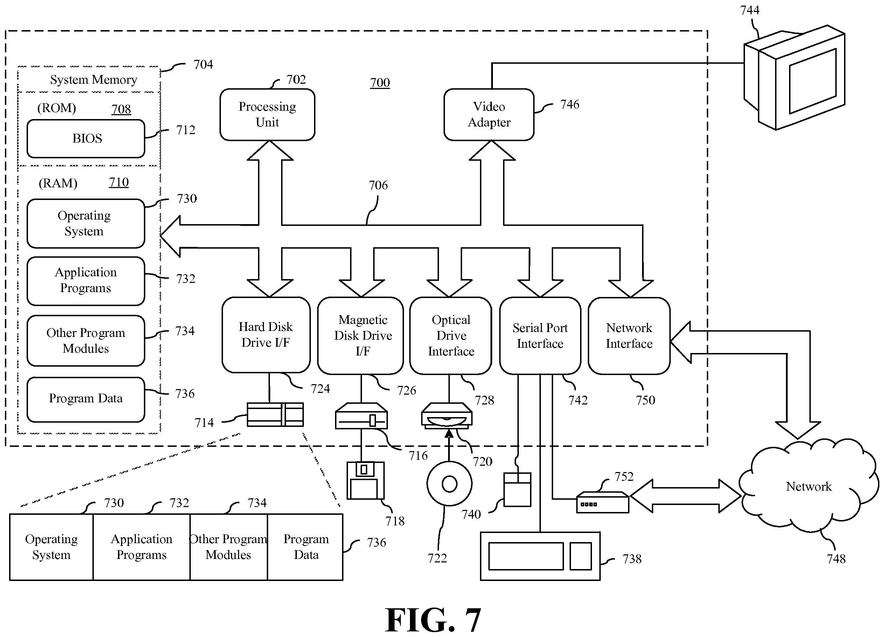

FIG. 7 depicts an example processor-based computer system 700 that may be used to implement various embodiments described herein. For example, system 700 may be used to implement set top box 102, controller(s) 104, and/or API 108 as described above in reference to FIGS. 1, 4, and 5, as well as any components thereof, and may be used to implement gesture control system 300 as described above in reference to FIG. 3, as well as any components thereof. The description of system 700 provided herein is provided for purposes of illustration, and is not intended to be limiting. Embodiments may be implemented in further types of computer systems, as would be known to persons skilled in the relevant art(s).

As shown in FIG. 7, system 700 includes a processing unit 702, a system memory 704, and a bus 706 that couples various system components including system memory 704 to processing unit 702. Processing unit 702 may comprise one or more processors or processing cores. Bus 706 represents one or more of any of several types of bus structures, including a memory bus or memory controller, a peripheral bus, an accelerated graphics port, and a processor or local bus using any of a variety of bus architectures. System memory 704 includes read only memory (ROM) 708 and random access memory (RAM) 710. A basic input/output system 712 (BIOS) is stored in ROM 708.

System 700 also has one or more of the following drives: a hard disk drive 714 for reading from and writing to a hard disk, a magnetic disk drive 716 for reading from or writing to a removable magnetic disk 718, and an optical disk drive 720 for reading from or writing to a removable optical disk 722 such as a CD ROM, DVD ROM, BLU-RAY™ disk or other optical media. Hard disk drive 714, magnetic disk drive 716, and optical disk drive 720 are connected to bus 706 by a hard disk drive interface 724, a magnetic disk drive interface 726, and an optical drive interface 728, respectively. The drives and their associated computer-readable media provide nonvolatile storage of computer-readable instructions, data structures, program modules and other data for the computer. Although a hard disk, a removable magnetic disk and a removable optical disk are described, other types of computer-readable storage devices and storage structures can be used to store data, such as flash memory cards, digital video disks, random access memories (RAMs), read only memories (ROM), and the like.

A number of program modules may be stored on the hard disk, magnetic disk, optical disk, ROM, or RAM. These program modules include an operating system 730, one or more application programs 732, other program modules 734, and program data 736. In accordance with various embodiments, the program modules may include computer program logic that is executable by processing unit 702 to perform any or all of the functions and features of set top box 102, controller(s) 104, and/or API 108 as described above in reference to FIG. 1, as well as any components thereof, and may be used to implement gesture control system 300 as described above in reference to FIG. 3, as well as any components thereof, such as operating mode logic 302, receiving logic 304, determination logic 306, translation logic 308, and output logic 310. The program modules may also include computer program logic that, when executed by processing unit 702, performs any of the steps or operations shown or described in reference to the flowchart of FIG. 6.

A user may enter commands and information into system 700 through input devices such as a keyboard 738 and a pointing device 740. Other input devices (not shown) may include a microphone, joystick, game controller, scanner, or the like. In one embodiment, a touch screen is provided in conjunction with a display 744 to allow a user to provide user input via the application of a touch (as by a finger or stylus for example) to one or more points on the touch screen. These and other input devices are often connected to processing unit 702 through a serial port interface 742 that is coupled to bus 706, but may be connected by other interfaces, such as a parallel port, game port, or a universal serial bus (USB).

A display 744 is also connected to bus 706 via an interface, such as a video adapter 746. In addition to display 744, system 700 may include other peripheral output devices (not shown) such as speakers and printers.

System 700 is connected to a network 748 (e.g., a local area network or wide area network such as the Internet or the cloud) through a network interface or adapter 750, a modem 752, or other suitable means for establishing communications over the network. Modem 752, which may be internal or external, is connected to bus 706 via serial port interface 742.

As used herein, the terms "computer program medium," "computer-readable medium," and "computer-readable storage medium" are used to generally refer to storage devices or storage structures such as the hard disk associated with hard disk drive 714, removable magnetic disk 718, removable optical disk 722, as well as other storage device or storage structures such as flash memory cards, digital video disks, random access memories (RAMs), read only memories (ROM), and the like. Such computer-readable storage media are distinguished from and non-overlapping with communication media (do not include communication media). Communication media typically embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media. Embodiments are also directed to such communication media.

As noted above, computer programs and modules (including application programs 732 and other program modules 734) may be stored on the hard disk, magnetic disk, optical disk, ROM, or RAM. Such computer programs may also be received via network interface 750, serial port interface 742, or any other interface type. Such computer programs, when executed or loaded by an application, enable computer 700 to implement features of embodiments of the present invention discussed herein. Accordingly, such computer programs represent controllers of the computer 700.

Embodiments are also directed to computer program products comprising software stored on any computer useable medium. Such software, when executed in one or more data processing devices, causes a data processing device(s) to operate as described herein. Embodiments of the present invention employ any computer-useable or computer-readable medium, known now or in the future. Examples of computer-readable mediums include, but are not limited to storage devices and storage structures such as RAM, hard drives, floppy disks, CD ROMs, DVD ROMs, zip disks, tapes, magnetic storage devices, optical storage devices, MEMs, nanotechnology-based storage devices, and the like.

In alternative implementations, any of set top box 102, controller(s) 104, and/or API 108 may be implemented as hardware logic/electrical circuitry or firmware. In accordance with further embodiments, one or more of these components may be implemented in a system-on-chip (SoC). The SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### VIII. Conclusion

While various embodiments have been described above, it should be understood that they have been presented by way of example only, and not limitation. It will be apparent to persons skilled in the relevant art(s) that various changes in form and details can be made therein. Thus, the breadth and scope of the present invention should not be limited by any of the above-described exemplary embodiments, but should be defined only in accordance with the following claims.

## Claims

1. A method (600) performed by a controller (104) to remotely control a multi-media device (106), comprising:
obtaining (602) a first information indicative of an operating mode of the multi-media device (106);
receiving (604) one or more control gesture representations associated with one or more first commands of a first operating mode of the multi-media device and one or more second commands of a second operating mode of the multi-media device (106);
determining (606) that the multi-media device is operating in the first operating mode based on the obtained first information;
translating (608) the one or more control gesture representations into the one or more first commands based at least on the determining that the multi-media device is operating in the first operating mode; and
outputting (610) the one or more first commands from the controller (104) to the multi-media device (106); and
automatically switching a gesture-command mapping based on a second information indicative of the operating mode of the multi-media device (106) obtained after the first information and indicating that the multi-media device (106) is in the second operating mode.

2. The method (600) of claim 1, wherein the obtained first and second information indicative of the operating mode of the multi-media device (106) are obtained from the multi-media device (106) via a set top box (102) embodying a pass signal through mechanism to pass said first and second information to the controller (104).

3. The method (600) of claim 1, wherein at least one control gesture representation of the one or more control gesture representations is normalized to control across a plurality of different multi-media devices (106), services, applications, channels and/or content providers.

4. The method (600) of claim 1, wherein a control gesture representation of the one or more control gesture representations corresponds to a first one of the one or more first commands in a first sub-mode of the first operating mode, and corresponds to a second one of the one or more first commands in a second sub-mode of the first operating mode.

5. The method (600) of claim 1,
wherein the first operating mode is one of a playback mode or a navigation mode, and
wherein the second operating mode is the other one of the playback mode or the navigation mode.

6. The method (600) of claim 5,
wherein the playback mode comprises at least one playback sub-mode, the at least one playback sub-mode comprising one or more of a live video sub-mode, an internet video sub-mode, a recorded video sub-mode, an on-demand video sub-mode, a pay-per-view video sub-mode, and an audio sub-mode, and
wherein the navigation mode comprises at least one navigation sub-mode, the at least one navigation sub-mode comprising one or more of a program guide sub-mode, a recordings sub-mode, a top-level menu sub-mode, a video menu sub-mode, and a settings sub-mode.

7. The method (600) of claim 1, wherein obtaining (602) the first information comprises invoking an application programming interface, API, (108) by the controller (104) to obtain the first information.

8. The method (600) of claim 1, wherein receiving (604) the one or more control gesture representations comprises invoking an API (108) to receive the one or more control gesture representations.

9. A computer-readable medium comprising computer executable instructions stored thereon which, when executed by a processing unit (702), cause the processing unit (702) to perform the method (600) of any one of the preceding claims.

10. A system (300) for remotely controlling a multi-media device (106) using a controller (104), comprising:
operating mode logic (302) on the controller (104) configured to obtain a first information indicative of an operating mode of the multi-media device (106);
receiving logic (304) on the controller (104), configured to receive one or more control gesture representations associated with one or more first commands of a first operating mode of the multi-media device (106) and one or more second commands of a second operating mode of the multi-media device (106);
determination logic (306) on the controller (104), configured to determine that the multi-media device (106) is operating in the first operating mode based on the obtained first information;
translation logic (308) on the controller (104), configured to translate the one or more control gesture representations into the one or more first commands based at least on the determining that the multi-media device (106) is operating in the first operating mode; and
output logic (310) on the controller (104), configured to output the one or more first commands from the controller (104) to the multi-media device (106),
wherein the controller (104) is further configured to automatically switch a gesture-command mapping based on a second information indicative of the operating mode of the multi-media device (106) obtained after the first information and indicating that the multi-media device (106) is in the second operating mode.

11. The system (300) of claim 10, further comprising a set top box (102) configured to obtain the first and second information indicative of the operating mode of the multi-media device (106) from the multi-media device (106), and having a pass signal through mechanism to pass said first and second information to the controller (104).

## Patentansprüche

1. Verfahren (600), das von einer Steuerung (104) durchgeführt wird, um eine Multimedia-Vorrichtung (106) zu steuern, umfassend:
Erhalten (602) einer ersten Information, die auf einen Betriebsmodus der Multimedia-Vorrichtung (106) hinweist;
Empfangen (604) einer oder mehrerer Steuerungsgestendarstellungen, die mit einem oder mehreren ersten Befehlen eines ersten Betriebsmodus der Multimedia-Vorrichtung und einem oder mehreren zweiten Befehlen eines zweiten Betriebsmodus der Multimedia-Vorrichtung (106) verbunden sind;
Bestimmen (606), dass die Multimedia-Vorrichtung in dem ersten Betriebsmodus arbeitet, basierend auf der erhaltenen ersten Information;
Übersetzen (608) der einen oder mehreren Steuerungsgestendarstellungen in den einen oder die mehreren ersten Befehle, basierend zumindest auf dem Bestimmen, dass die Multimedia-Vorrichtung in dem ersten Betriebsmodus arbeitet; und
Ausgeben (610) des einen oder der mehreren ersten Befehle von der Steuerung (104) an die Multimedia-Vorrichtung (106); und
automatisch Wechseln einer Gesten-Befehls-Zuordnung basierend auf einer zweiten Information, die auf den Betriebsmodus der Multimedia-Vorrichtung (106) hinweist, die nach der ersten Information erhalten wird und die darauf hinweist, dass sich die Multimedia-Vorrichtung (106) in dem zweiten Betriebs-modus befindet.

2. Verfahren (600) nach Anspruch 1, wobei die erhaltenen ersten und zweiten Informationen, die auf den Betriebsmodus der Multimedia-Vorrichtung (106) hinweisen, von der Multimedia-Vorrichtung (106) über eine Set-Top-Box (102) erhalten werden, die einen Signalweiterleitungsmechanismus aufweist, um die ersten und zweiten Informationen an die Steuerung (104) weiterzuleiten.

3. Verfahren (600) nach Anspruch 1, wobei zumindest eine Steuerungsgestendarstellung von der einen oder den mehreren Steuerungsgestendarstellungen normiert ist, um quer über eine Vielzahl von verschiedenen Multimedia-Vorrichtungen (106), Diensten, Anwendungen, Kanälen und/oder Inhalte-Anbietern zu steuern.

4. Verfahren (600) nach Anspruch 1, wobei eine Steuerungsgestendarstellung von der einen oder den mehreren Steuerungsgestendarstellungen einem ersten des einen oder der mehreren ersten Befehle in einem ersten Sub-Modus des ersten Betriebsmodus entspricht und einem zweiten von dem ersten oder den mehreren ersten Befehlen in einem zweiten Sub-Modus des ersten Betriebsmodus entspricht.

5. Verfahren (600) nach Anspruch 1,
wobei der erste Betriebsmodus einer von einem Wiedergabe-Modus oder einem Navigations-Modus ist; und
wobei der zweite Betriebsmodus der andere von dem Wiedergabe-Modus oder dem Navigations-Modus ist.

6. Verfahren (600) nach Anspruch 5,
wobei der Wiedergabe-Modus zumindest einen Wiedergabe-Sub-Modus umfasst, wobei der zumindest eine Wiedergabe-Sub-Modus einen oder mehrere von einem Live-Video-Sub-Modus, einem Internet-Video-Sub-Modus, einem aufgezeichnetes Video-Sub-Modus, einem On-Demand-Video-Sub-Modus, einem Pay-per-View-Video-Sub-Modus und einem Audio-Sub-Modus umfasst, und
wobei der Navigations-Modus zumindest einen Navigations-Sub-Modus umfasst, wobei der zumindest eine Navigations-Sub-Modus einen oder mehrere von einem Programmführungs-Sub-Modus, einem Aufzeichnungs-Sub-Modus, einem Top-Level-Menü-Sub-Modus, einem Videomenü-Sub-Modus und einem Einstellungs-Sub-Modus umfasst.

7. Verfahren (600) nach Anspruch 1, wobei Erhalten (602) der ersten Information Aufrufen einer Anwendungsprogrammierschnittstelle, API, (108) durch die Steuerung (104), um die erste Information zu erhalten, umfasst.

8. Verfahren (600) nach Anspruch 1, wobei Empfangen (604) der einen oder der mehreren Steuerungsgestendarstellungen Aufrufen einer API (108), um die eine oder die mehreren Steuerungsgestendarstellungen zu empfangen, umfasst.

9. Computerlesbares Medium, das darauf gespeicherte computerausführbare Instruktionen umfasst, die, wenn sie durch eine Verarbeitungseinheit (702) ausgeführt werden, bewirken, dass die Verarbeitungseinheit (702) das Verfahren (600) nach einem der vorstehenden Ansprüche durchführt.

10. System (300) zum Fernsteuern einer Multimedia-Vorrichtung (106) unter Verwendung einer Steuerung (104), umfassend:
Betriebs-Modus-Logik (302) auf der Steuerung (104), die konfiguriert ist, um eine erste Information, die auf einen Betriebsmodus der Multimedia-Vorrichtung (106) hinwiest, zu erhalten;
Empfangs-Logik (304) auf der Steuerung (104), die konfiguriert ist, um eine oder mehrere Steuerungsgestendarstellungen, die mit einem oder mehreren ersten Befehlen eines ersten Betriebs-Modus der Multimedia-Vorrichtung (106) und einem oder mehreren zweiten Befehlen eines zweiten Betriebs-Modus der Multimedia-Vorrichtung (106) verbunden sind, zu empfangen;
Bestimmungs-Logik (306) auf der Steuerung (104), die konfiguriert ist, um basierend auf der erhaltenen ersten Information zu bestimmen, dass die Multi-media-Vorrichtung (106) in dem ersten Betriebsmodus arbeitet;
Übersetzungs-Logik (308) auf der Steuerung (104), die konfiguriert ist, um die eine oder die mehreren Steuerungsgestendarstellungen basierend auf zumindest dem Bestimmen, dass die Multimedia-Vorrichtung (106) in dem ersten Betriebsmodus arbeitet, in den einen oder die mehreren ersten Befehle zu übersetzen; und
Ausgabe-Logik (310) auf der Steuerung (104), die konfiguriert ist, um den einen oder die mehreren ersten Befehle von der Steuerung (104) an die Multi-media-Vorrichtung (106) auszugeben,
wobei die Steuerung (104) weiter konfiguriert ist, um basierend auf einer zweiten Information, die auf den Betriebsmodus der Multimedia-Vorrichtung (106) hinweist, die nach der ersten Information erhalten wird und die darauf hinweist, dass sich die Multimedia-Vorrichtung (106) in dem zweiten Betriebs-modus befindet, automatisch eine Gesten-Befehls-Zuordnung zu wechseln.

11. System (300) nach Anspruch 10, weiter umfassend eine Set-Top-Box (102), die konfiguriert ist, um die ersten und zweiten Informationen, die auf den Betriebs-modus der Multimedia-Vorrichtung (106) hinweisen, von der Multimedia-Vorrichtung (106) zu erhalten, und die einen Signalweiterleitungsmechanismus aufweist, um die ersten und zweiten Informationen an die Steuerung (104) weiterzuleiten.

## Revendications

1. Procédé (600) mis en oeuvre par un contrôleur (104) pour la commande à distance d'un dispositif multimédia (106), comprenant le fait de :
obtenir (602) une première information indiquant un mode opératoire du dispositif multimédia (106) ;
recevoir (604) une ou plusieurs représentations de gestes de commande associées à une ou plusieurs premières commandes d'un premier mode opératoire du dispositif multimédia et une ou plusieurs secondes commandes d'un second mode opératoire du dispositif multimédia (106) ;
déterminer (606) le fait que le dispositif multimédia travaille dans le premier mode opératoire en se basant sur la première information obtenue ;
traduire (608) lesdites une ou plusieurs représentations de gestes de commande en lesdites une ou plusieurs premières commandes en se basant sur au moins la détermination du fait que le dispositif multimédia travaille dans le premier mode opératoire ; et
transmettre (610) lesdites une ou plusieurs premières commandes du contrôleur (104) au dispositif multimédia (106) ; et
automatiquement commuter une mise en correspondance de commande de geste en se basant sur une seconde information indiquant le mode opératoire du dispositif multimédia (106) obtenue après la première information et indiquant que le dispositif multimédia (106) se trouve dans le second mode opératoire.

2. Procédé (600) selon la revendication 1, dans lequel la première et la seconde information obtenues indiquant le mode opératoire du dispositif multimédia (106) sont obtenues à partir du dispositif multimédia (106) via un boîtier de décodage (102) comprenant un mécanisme de transfert de signal pour le transfert de ladite première et de ladite seconde information au contrôleur (104).

3. Procédé (600) selon la revendication 1, dans lequel au moins une représentation de geste de commande parmi lesdites une ou plusieurs représentations de gestes de commande est normalisée pour une commande à travers une pluralité de différents dispositifs multimédias (106), différents services, différentes applications, différents canaux et/ou différents fournisseurs de contenus.

4. Procédé (600) selon la revendication 1, dans lequel une représentation de geste de commande parmi lesdites une ou plusieurs représentations de gestes de commande correspond à une première commande parmi lesdites une ou plusieurs premières commandes dans un premier sous-mode du premier mode opératoire et correspond à une seconde commande parmi lesdites une ou plusieurs premières commandes dans un second sous-mode du premier mode opératoire.

5. Procédé (600) selon la revendication 1,
dans lequel le premier mode opératoire représente un mode choisi parmi un mode de lecture ou un mode de navigation ; et
dans lequel le second mode opératoire représente l'autre mode, à savoir soit le mode de lecture, soit le mode de navigation.

6. Procédé (600) selon la revendication 5,
dans lequel le mode de lecture comprend au moins un sous-mode de lecture, ledit au moins un sous-mode de lecture comprenant un ou plusieurs sous-modes choisis parmi un sous-mode vidéo en direct, un sous-mode vidéo sur Internet, un sous-mode vidéo enregistrée, un sous-mode vidéo à la demande, un sous-mode vidéo de paiement à la carte et un sous-mode audio ; et
dans lequel le mode de navigation comprend au moins un sous- mode de navigation, ledit au moins un sous-mode de navigation comprenant un ou plusieurs sous-modes choisis parmi un sous-mode guide de programmes, un sous-mode enregistrements, un sous-mode menu supérieur, un sous-mode menu vidéo et un sous-mode réglages.

7. Procédé (600) selon la revendication 1, dans lequel l'obtention (602) de la première information comprend le fait de faire appel à une interface de programmation d'application, API (108), par le contrôleur (104) pour obtenir la première information.

8. Procédé (600) selon la revendication 1, dans lequel la réception (604) desdites une ou plusieurs représentations de gestes de commande comprend le fait de faire appel à une API (108) pour recevoir lesdites une ou plusieurs représentations de gestes de commande.

9. Support lisible par ordinateur comprenant des instructions exécutables par ordinateur qui y sont stockées, qui, lorsqu'elles sont exécutées par une unité de traitement (702), font en sorte que l'unité de traitement (702) mette en oeuvre le procédé (600) selon l'une quelconque des revendications précédentes.

10. Système (300) pour la commande à distance d'un dispositif multimédia (106) utilisant un contrôleur (104), comprenant :
une logique de mode opératoire (302) sur le contrôleur (104), configurée pour obtenir une première information indiquant un mode opératoire du dispositif multimédia (106) ;
une logique de réception (304) sur le contrôleur (104), configurée pour recevoir une ou plusieurs représentations de gestes de commande associées à une plusieurs commandes d'un premier mode opératoire du dispositif multimédia (106) et une plusieurs secondes commandes d'un second mode opératoire du dispositif multimédia (106) ;
une logique de détermination (306) sur le contrôleur (104), configurée pour déterminer le fait que le dispositif multimédia (106) travaille dans le premier mode opératoire en se basant sur la première information obtenue ;
une logique de traduction (308) sur le contrôleur (104), configurée pour traduire lesdites une ou plusieurs représentations de gestes de commande en lesdites une ou plusieurs premières commandes en se basant sur au moins la détermination du fait que le dispositif multimédia (106) travaille dans le premier mode opératoire ; et
une logique de sortie (310) sur le contrôleur (104), configurée pour transmettre lesdites une ou plusieurs premières commandes du contrôleur (104) au dispositif multimédia (106) ;
dans lequel le contrôleur (104) est en outre configuré pour automatiquement commuter une mise en correspondance de commande de geste en se basant sur une seconde information indiquant le mode opératoire du dispositif multimédia (106) obtenue après la première information et indiquant que le dispositif multimédia (106) se trouve dans le second mode opératoire.

11. Système (300) selon la revendication 10, comprenant en outre un boîtier de décodage (102) configuré pour obtenir la première et la seconde information indiquant le mode opératoire du dispositif multimédia (106) à partir du dispositif multimédia (106), et comprenant un mécanisme de transfert de signal pour le transfert de ladite première et de ladite seconde information au contrôleur (104).
